# EUROPÄISCHE PATENTSCHRIFT

(11) **EP 3 112 716 B1**
(45) Veröffentlichungstag und Bekanntmachung des Hinweises auf die Patenterteilung: **19.01.2022**
(21) Anmeldenummer: 16175938.6
(22) Anmeldetag: 14.06.2016
(51) Int. Cl.: F16D 23/02

(54) **BAUEINHEIT FÜR EINE SYNCHRONISIERUNGSEINHEIT EINES ZAHNRÄDERWECHSELGETRIEBES**
ASSEMBLY FOR A SYNCHRONIZING UNIT OF A GEAR WHEEL CHANGE-SPEED GEARBOX
COMPOSANT D'UNITÈ DE SYNCHRONISATION D'UNE BOÎTE MANUELLE À ENGRENAGE

(30) Priorität: 26.06.2015 EP 15174118
(43) Veröffentlichungstag der Anmeldung: 04.01.2017
(62) Teilanmeldung aus: 16174414.9
(73) Patentinhaber: Oerlikon Friction Systems (Germany) GmbH, 28719 Bremen (DE)
(72) Erfinder: Christoffer, Ulf, 28719 Bremen (DE); Ralf, Frede, 27711 Freissenbüttel (DE); Spreckels, Marcus Dr., 28876 Sagehorn (DE)
(74) Vertreter: IPS Irsch AG

(56) Entgegenhaltungen:
- EP-A1- 0 162 393
- EP-A1- 2 677 187
- EP-B1- 2 677 187
- DE-A1- 19 858 987
- DE-A1-102006 061 415

## Beschreibung

Die Erfindung betrifft eine Baueinheit für eine Synchronisierungseinheit eines Zahnräderwechselgetriebes gemäß dem Oberbegriff des Anspruchs 1, sowie einen Reibring und einen Synchronring für eine solche Baueinheit und eine Synchronisierungseinheit und ein Zahnräderwechselgetriebe mit einer solchen Baueinheit.

In der EP 2677 187 A1 wird eine Baueinheit für eine Synchronisierungseinheit eines Zahnräderwechselgetriebes eines Fahrzeugs beschrieben. Die Baueinheit verfügt über einen Reibring, welcher einen konischen Reibringkörper mit einer inneren Reibfläche und eine äussere Einbaufläche umfasst, die den Reibringkörper in einer senkrecht zu einer axialen Reibringachse verlaufenden radialen Umfangsrichtung jeweils begrenzen. Die innere Reibfläche erstreckt sich dabei unter einem vorgebbaren Reibwinkel und die äussere Einbaufläche unter einem vorgebbaren Einbauwinkel jeweils konisch entlang der Reibringachse. Die Baueinheit verfügt ausserdem über einen Synchronring mit einer zur äusseren Einbaufläche des Reibrings korrespondierenden Kontaktfläche. Der Synchronring und der Reibring sind so ausgestaltet und angeordnet, dass bei einem Synchronisiervorgang, bei welchem der Synchronring in Richtung eines zu synchronisierenden Gangrads verschoben wird, die Kontaktfläche des Synchronrings an der äusseren Einbaufläche des Reibrings anliegt und die innere Reibfläche des Reibrings mit dem Gangrad in Reibkontakt ist.

Der Einsatz einer derartigen Baugruppe in einer Synchronisierungseinheit eines Zahnräderwechselgetriebes ermöglicht zum einen eine hohe Effizienz, also einen grossen Verstärkungseffekt zwischen Betätigungskraft und Synchronisierungsmoment und gleichzeitig einen hohen Schaltkomfort. Dies wird durch die räumliche Trennung der Funktion "Synchronisierungsmoment erzeugen" und "Reibpaarung lösen", die bei Synchronisierungseinheiten, die auf dem sogenannten Borg-Warner-Konzept beruhen, in ein und derselben Reibpaarung vereint sind. Die Trennung wird durch den Einsatz einer Baueinheit aus einem Reibring mit einer Reibfläche und einer Einbaufläche und einem Synchronring mit einer mit der Einbaufläche des Reibrings korrespondierenden Kontaktfläche statt nur eines Synchronrings mit einer oder mehreren Reibflächen erreicht. Die Reibfläche des Reibrings erzeugt kraftschlüssig das Synchronisierungsmoment, an der Kontaktfläche und der Einbaufläche erfolgt ein zuverlässiges Lösen des Kraftschlusses. Damit kann eine unabhängige Optimierung der beiden Funktionen hinsichtlich ihrer spezifischen Anforderungen erfolgen.

Beim Einsatz der beschriebenen Synchronisierungseinheiten kann es insbesondere bei niedrigen Betriebstemperaturen zu Komfort- und Funktionsstörungen in Form von einem so genannten zweiten Druckpunkt oder auch zu blockierten Schaltungen kommen.

Zudem ist in der DE 198 58 987 A1 ein Synchronring einer Synchronisierungseinrichtung gezeigt, der mit einer strukturierten Oberfläche versehen ist. Die strukturierte Oberfläche ist in Form einer Ölnut ausgebildet, durch die Schmieröl schneller von den Reibflächen des Synchronrings entfernt werden kann, was zur Folge hat, dass die Synchronisierzeiten verkürzt und somit der Schaltkomfort erhöht wird.

Auch ist in der DE 10 2006 061415 A1 ein Synchronring gezeigt. Dieser ist aus mehreren ringförmigen Trägerdrähten aufgebaut, wobei auf den Trägerdrähten mehrere Reibelemente beweglich angeordnet sind. Durch die beweglichen Reibelemente ist es möglich, sowohl Fertigungsungenauigkeiten des Ringkörpers als auch des Gegenkonus auszugleichen.

Demgegenüber ist es die Aufgabe der Erfindung, eine Baueinheit für eine Synchronisierungseinheit eines Zahnräderwechselgetriebes vorzuschlagen, welche einen funktionssicheren und komfortablen Betrieb des Zahnräderwechselgetriebes ermöglicht. Erfindungsgemäß wird diese Aufgabe mit einer Baugruppe mit den Merkmalen des Anspruchs 1 gelöst.

Die erfindungsgemässe Baueinheit für eine Synchronisierungseinheit eines Zahnräderwechselgetriebes verfügt über einen Reibring, welcher einen konischen Reibringkörper mit einer Reibfläche, insbesondere einer inneren Reibfläche, und einer Einbaufläche, insbesondere einer äusseren Einbaufläche, umfasst, die den Reibringkörper in einer senkrecht zu einer axialen Reibringachse verlaufenden radialen Umfangsrichtung jeweils begrenzen. Die Reibfläche erstreckt sich dabei unter einem vorgebaren Reibwinkel und die Einbaufläche unter einem vorgebaren Einbauwinkel jeweils konisch entlang der Reibringachse. Die Baueinheit verfügt ausserdem über einen Synchronring mit einer zur Einbaufläche des Reibrings korrespondierenden Kontaktfläche. Der Synchronring und der Reibring sind so ausgestaltet und angeordnet, dass bei einem Synchronisiervorgang, bei welchem der Synchronring in Richtung eines zu synchronisierenden Gangrads verschoben wird, die Kontaktfläche des Synchronrings an der Einbaufläche des Reibrings anliegt und die Reibfläche des Reibrings mit dem Gangrad in Reibkontakt ist. Durch den Reibkontakt kann eine Drehzahlangleichung zwischen Gangrad und Reibring und somit auch mit dem insbesondere drehfest mit dem Reibring verbundenen Synchronring erfolgen. Für die drehfeste Kopplung zwischen dem Reibring und dem Synchronring weisen der Reibring und/oder der Synchronring so genannte Verdrehsicherungen auf.

Erfindungsgemäss weisen die Einbaufläche des Reibrings und/oder die Kontaktfläche des Synchronrings der Baueinheit eine adhäsionsvermindernde Oberflächenstruktur auf.

Damit wird die Adhäsion zwischen der Einbaufläche des Reibrings und der Kontaktfläche des Synchronrings minimiert. Dies verhindert ein Zusammenkleben von Reibring und Synchronring, was beim Lösen der Reibpaarung dazu führen kann, dass die oben beschriebene räumliche Trennung der Funktionen nicht mehr gegeben ist und das Lösen der Reibpaarung an der nicht dafür vorgesehenen und ausgelegten Reibfläche des Reibrings erfolgt. Wenn sich Reibring und Synchronring nicht voneinander lösen können, wirken sie beim Lösen der Reibpaarung wie ein Synchronring einer Borg-Warner-Synchronisierung. Das beschriebene Problem des Zusammenklebens tritt dabei insbesondere bei tiefen Betriebstemperaturen und damit verbundener hoher Viskosität des zur Schmierung und Kühlung dienenden Getriebeöls auf.

Unter einer korrespondierenden Kontaktfläche des Synchronrings soll in diesem Zusammenhang verstanden werden, dass die Kontaktfläche und die Einbaufläche so ausgeführt sind, dass sie bei einer ausreichenden Verschiebung des Synchronrings in Richtung der Reibringachse auf den Reibring zu, zur Anlage kommen. Sie weisen damit im Wesentlichen den selben Winkel gegenüber der Reibringachse auf.

Der Reibring ist insbesondere als ein geschlitzter bzw. offener Ring, also ein Ring mit einer Unterbrechung ausgeführt. Er kann auch als ein segmentierter Ring ausgeführt sein, also als ein Ring, der aus mehreren beispielsweise zwei bis acht einzelnen Ringsegmenten besteht.

Der Reibwinkel des Reibrings ist insbesondere verschieden vom Einbauwinkel des Reibrings. Im Speziellen ist der Einbauwinkel des Reibrings grösser als der Reibwinkel des Reibrings. Dies ermöglicht eine besonders hohe Effizienz und gleichzeitig einen besonders hohen Schaltkomfort.

In Ausgestaltung der Erfindung weisen die Einbaufläche des Reibrings und/oder die Kontaktfläche des Synchronrings Vertiefungen auf. Damit wird die Grösse der Fläche, auf der sich der Reibring und der Synchronring berühren, gegenüber einer Ausführung ohne die genannten Vertiefungen verringert. Da die Adhäsion zwischen Reibring und Synchronring ganz wesentlich von der Grösse dieser Fläche abhängt, nämlich mit steigender Grösse der Fläche ebenfalls ansteigt, führt das zu einer besonders niedrigen Adhäsion und damit wie beschrieben zu einem hohen Schaltkomfort.

Die Vertiefungen können eine Tiefe zwischen einigen Mikrometern und einigen Millimetern aufweisen. Sie können beispielsweise einen Anteil an den Gesamtflächen zwischen 20 und 80 % aufweisen. Die Vertiefungen können beispielsweise über ein Umformwerkzeug zur Herstellung des Reibrings oder des Synchronrings in der Kontaktflächen eingebracht werden oder in einem separaten Bearbeitungsschritt durch eine materialabtragende Bearbeitung wie beispielsweise Drehen, Schleifen, Stoßen, Laserbearbeitung oder Fräsen oder eine umformende Bearbeitung wie beispielsweise Walzen oder Prägen erzeugt werden.

In Ausgestaltung der Erfindung sind die Vertiefungen als Nuten und/oder Löcher ausgeführt. Die Nuten können beispielsweise im Wesentlichen entlang der Reibringachse oder in Umfangrichtung verlaufen. Sie können aber auch gegenüber der Umfangrichtung geneigt verlaufen. Die Löcher können als Durchgangs- oder als Sacklöcher ausgeführt sein und insbesondere einen kreisrunden Durchmesser aufweisen, der sich auch in nachfolgenden Umformschritten beispielsweise zu einer Ellipse verformen kann. Die Löcher können identische oder auch unterschiedliche Durchmesser, beispielsweise zwischen 1 und 5 mm aufweisen. Derartige Nuten, Löcher oder Bohrungen sind sehr einfach und damit kostengünstig herstellbar.

In Ausgestaltung der Erfindung werden die Vertiefungen mittels eines Kugeloder Sandstrahlverfahrens erzeugt. Damit kann eine ungleichmässige Oberflächenstruktur erzielt werden, was einen besonders hohen Flächenanteil an Vertiefungen und damit eine besonders niedrige Adhäsion ermöglicht. Ausserdem ermöglicht dies eine einfache und damit kostengünstige Herstellung des Synchronrings und des Reibrings.

In Ausgestaltung der Erfindung sind die Vertiefungen als Lasertexturierung ausgeführt. Damit kann sehr exakt eine gewünschte, optimale Oberflächenstruktur erzeugt werden.

In Ausgestaltung der Erfindung werden die Vertiefungen mittels Ätzverfahrens erzeugt. Dies ermöglicht eine besonders kostengünstige Herstellung einer gewünschten Oberflächenstruktur.

In Ausgestaltung der Erfindung weisen die Einbaufläche des Reibrings und/oder die Kontaktfläche des Synchronrings eine adhäsionsvermindernde Beschichtung auf. Damit lassen sich die Adhäsionseigenschaften der Flächen besonders gut beeinflussen. Die Beschichtung kann beispielsweise eine Dicke von einigen Nanometern bei so genannten Dünnfilmbeschichtungen bis zu mehreren Mikrometern beispielsweise durch thermisches Spritzen aufweisen. Die genannten Flächen können nur eine Beschichtung oder die Beschichtung zusätzlich zu den oben genannten Vertiefungen aufweisen.

In Ausgestaltung der Erfindung ist die adhäsionsvermindernde Beschichtung als eine Kohlenstoffschicht, insbesondere als eine amorphe Kohlenstoffschicht ausgeführt. Derartige Beschichtungen werden auch als Diamond-Like Carbon. DLC-Schichten bezeichnet. Damit können sehr effektiv gewünschte Oberflächeneigenschaften, also auch Adhäsionseigenschaften erzielt werden.

In Ausgestaltung der Erfindung bestehen der Reibring und der Synchronring aus unterschiedlichen Materialien, insbesondere der Reibring aus Blech und der Synchronring aus Messing. Die Adhäsion zwischen Reibring und Synchronring ist auch davon abhängig, aus welchem Material sie bestehen. Es gibt Materialpaarungen, wie beispielsweise Blech und Messing, die eine geringe Adhäsionsneigung aufweisen. Es ist sogar möglich, dass die Auswahl einer passenden Materialpaarung ausreicht, um die oben genannte. Aufgabe der Erfindung zu lösen. Eine Baueinheit, welche die oben genannte Aufgabe löst, kann damit über einen Reibring und einen Synchronring aus unterschiedlichen Materialien verfügen, ohne dass die Einbaufläche des Reibrings und/oder die Kontaktfläche des Synchronrings eine adhäsionsvermindernde Oberflächenstruktur aufweist.

Die Erfindung bezieht sich weiter auf einen Reibring für eine erfindungsgemässe Baueinheit, einen Synchronring für eine erfindungsgemässe Baueinheit, eine Synchronisierungseinheit für ein Zahnräderwechselgetriebe mit einer erfindungsgemässen Baueinheit und einem Zahnräderwechselgetriebe für ein Fahrzeug mit einer erfindungsgemässen Baueinheit.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1a: einen Reibring mit segmentiertem Reibringkörper in einer expandierten Konfiguration;
- Fig. 1b: den Reibring gemäss Fig. 1a in einer zusammengezogenen Konfiguration;
- Fig. 1c: einen Schnitt entlang der Schnittlinie I-I gemäss Fig. 1a;
- Fig. 1d: einen Abschnitt des Reibrings gemäss Fig. 1a bzw. Fig. 1b in perspektivischer Ansicht;
- Fig. 2a: ein zweites Ausführungsbeispiel eines segmentierten Reibrings mit radialen Verdrehsicherungen;
- Fig. 2b: einen Abschnitt des Reibrings gemäss Fig. 2a in perspektivischer Ansicht;
- Fig. 3: ein Ausführungsbeispiel einer Synchronisierungseinheit mit einer Baueinheit aus Reibring und Synchronring;
- Fig. 4a: einen geschlitzten Reibring in einer expandierten Konfiguration;
- Fig. 4b: den geschlitzten Reibring gemäss Fig. 4a in einer zusammengezogenen Konfiguration;
- Fig. 5: einen Schnitt durch eine Baueinheit aus Reibring und Synchronring in einer Synchronisierungseinheit;
- Fig. 6: eine sehr schematische Darstellung eines Zahnräderwechselgetriebes ,
- Fig. 7: ein Schnitt durch einen Reibring mit einer beschichteten äusseren Einbaufläche und
- Fig. 8: ein Schnitt durch einen Synchronring mit einer beschichteten Kontaktfläche,
- Fig. 9a - 9h: Ausschnitte von Kontaktflächen von Synchronringen und äusseren Einbauflächen von Reibringen mit verschiedenen Oberflächenstrukturen.

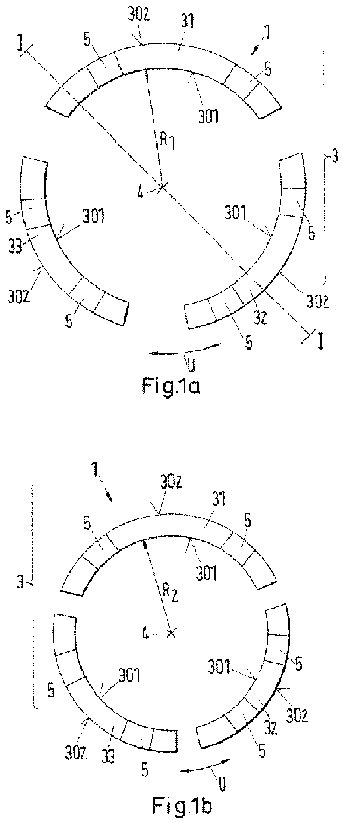

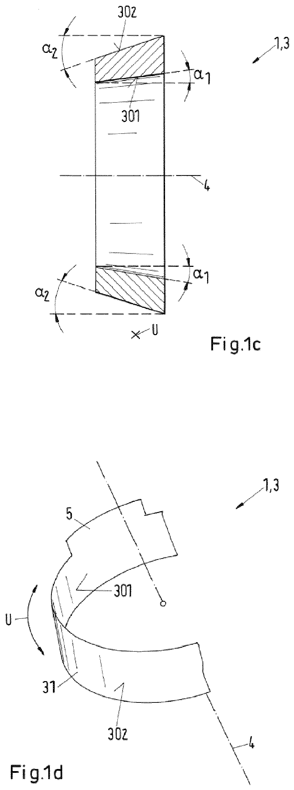

Die Fig. 1a und Fig. 1b bzw. die Fig. 1c und 1d zeigen in einer schematischen Darstellung ein und dasselbe sehr einfache Ausführungsbeispiel eines Reibrings mit segmentiertem Reibringkörper, wobei der Reibring im Folgenden gesamthaft mit dem Bezugszeichen 1 bezeichnet wird.

Gleiche Referenzzeichen bezeichnen gleiche Merkmale in allen Figuren.

Fig. 1a zeigt den Reibring 1 dabei in einer expandierten Konfiguration, während Fig. 1b den selben Reibring in einer zusammengezogenen Konfiguration zeigt. Fig. 1c zeigt zum besseren Verständnis einen Schnitt entlang der Schnittlinie I-I gemäss Fig. 1a, während anhand der Fig. 1d ein Abschnitt des Reibrings 1 gemäss Fig. 1a bzw. Fig. 1b in perspektivischer Ansicht gezeigt ist, um die sich entlang der Reibringachse 4 des Reibrings 1 erstreckenden Verdrehsicherungen 5 besser sehen zu können. Die Verdrehsicherungen 5 dienen zur drehfesten Kopplung des Reibrings 1 mit einem in den Fig. 1a - 1d nicht dargestellten Synchronring.

Der Reibring 1 gemäss den Fig. 1a bis Fig. 1d dient zur Verwendung in einer Synchronisierungseinheit 2 eines Zahnräderwechselgetriebes, insbesondere für ein Fahrzeug, im Speziellen für einen Personenkraftwagen, einen Transporter oder einen Lastkraftwagen. Der Reibring 1 umfasst einen konischen Reibringkörper 3 mit einer inneren Reibfläche 301 und einer äusseren Einbaufläche 302, die den Reibringkörper 3 in einer senkrecht zu einer axialen Reibringachse 4 verlaufenden radialen Umfangsrichtung U jeweils begrenzen. Dabei erstreckt sich die innere Reibfläche 301 unter einem vorgebaren Reibwinkel α₁ und die äussere Einbaufläche 302 unter einem vorgebaren Einbauwinkel α₂ jeweils konisch entlang der Reibringachse 4, wobei der Reibwinkel α₁ verschieden vom Einbauwinkel α₂ ist.

Wie insbesondere der Fig. 1c deutlich zu entnehmen ist, ist der Einbauwinkel α₂ grösser ist als der Reibwinkel α₁. Dabei ist es im Prinzip auch möglich, dass der Reibwinkel α₁ grösser ist als der Einbauwinkel α₂.

Wie anhand der Fig. 1a und Fig. 1 deutlich zu erkennen ist, ist der Reibringkörper 3 in diesem speziellen Ausführungsbeispiel ein segmentierter Reibringkörper 3, der eine Mehrzahl von separaten Reibringsegmenten 31, 32, 33, im vorliegenden speziellen Ausführungsbeispiel also drei Reibringsegmenten 31, 32, 33 umfasst, die in einer ringförmigen Anordnung den Reibringkörper 3 derart bilden, dass der Reibringkörper 3 im Einbauzustand in einer ersten expandierten Konfiguration gemäss Fig. 1a einen ersten Radius R, und in einer zweiten zusammengezogenen Konfiguration gemäss Fig. 1b einen zweiten Radius R₂ hat.

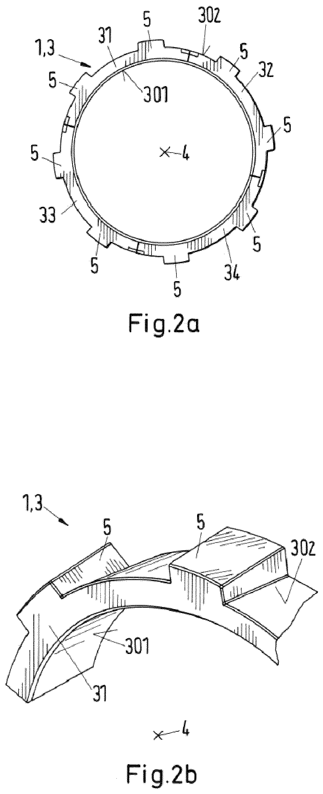

Es versteht sich dabei, dass der Reibring 1 auch aus einer anderen Anzahl von Reibringsegmenten 31, 32, 33, 34 aufgebaut sein kann, z.B. wie anhand der Fig. 2a und Fig. 2b exemplarisch gezeigt auch aus vier Reibringsegmenten 31, 32, 33, 34, oder auch zum Beispiel nur aus zwei oder mehr als vier Reibringsegmenten 31, 32, 33, 34.

Am Reibringkörper 3 ist dabei besonders bevorzugt mindestens eine Verdrehsicherung 5 vorgesehen, die sich bevorzugt entlang der Reibringachse 4 erstreckt, was man besonders deutlich aus der Fig. 1d ersehen kann.

Die Fig. 2a und Fig. 2b zeigen dabei das bereits erwähnte andere Ausführungsbeispiel eines erfindungsgemässen Reibrings 1, bei welchem sich die Verdrehsicherung 5 im Wesentlichen senkrecht zur Reibringachse 4 erstreckt.

Es versteht sich dabei von selbst, dass unabhängig von den gezeigten speziellen Ausführungsbeispielen die Anzahl der Verdrehsicherungen 5 je nach Ausführungsbeispiel verschieden sein und eine beliebige Anzahl an Verdrehsicherungen 5 vorgesehen sein können. In ganz speziellen Fällen ist es sogar möglich, dass die Verdrehsicherungen 5 am Reibring 1 fehlen und / oder, dass beispielweise andere Massnahmen vorgesehen sein können, die ein Verdrehen des Reibrings 1 im Betriebszustand verhindern.

Besonders vorteilhaft kann an der Reibfläche 301 eine in den Figuren aus Gründen der Übersichtlichkeit nicht explizit dargestellte Reibbeschichtung, insbesondere ein Reibbeschichtung in Form eines Karbon Reibbelags vorgesehen sein, die unter anderem dazu dienen kann, eine resultierende hohe mechanische und / oder thermische Belastung der Reibpaarung zumindest teilweise zu kompensieren.

Besonders Vorteilhaft ist der Reibring 1 dabei ein Stahlstanzteil oder Blechumformteil, was insbesondere eine industrielle Massenfertigung besonders einfach oder kostengünstig macht.

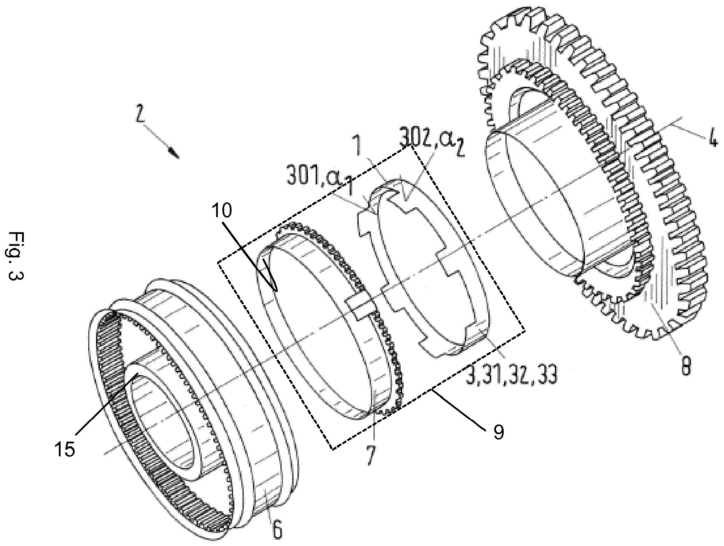

Figur 3 zeigt in schematischer Darstellung eine Synchronisierungseinheit 2 mit einem Reibring 1.

Die Synchronisierungseinheit 2 gemäss Fig. 3 umfasst neben dem Reibring 1 in an sich bekannter Weise weiter eine Schiebemuffe 6 mit einem Synchronkörper 15, einen Synchronring 7, sowie ein Gangrad 8, wobei die vorgenannten Komponenten derart koaxial zur Reibringachse 4 angeordnet sind, dass im Betriebszustand der Synchronring 7 durch die Schiebemuffe 6 gemeinsam mit dem Reibring 1 entlang der Reibringachse 4 in Richtung zum Gangrad 8 verschiebbar ist, so dass die innere Reibfläche 301 des Reibringkörpers 3 mit dem Gangrad 8 in Eingriff bringbar ist. Der Synchronring 7 und der Reibring 1 bilden dabei eine Baueinheit 9 der Synchronisierungseinheit.

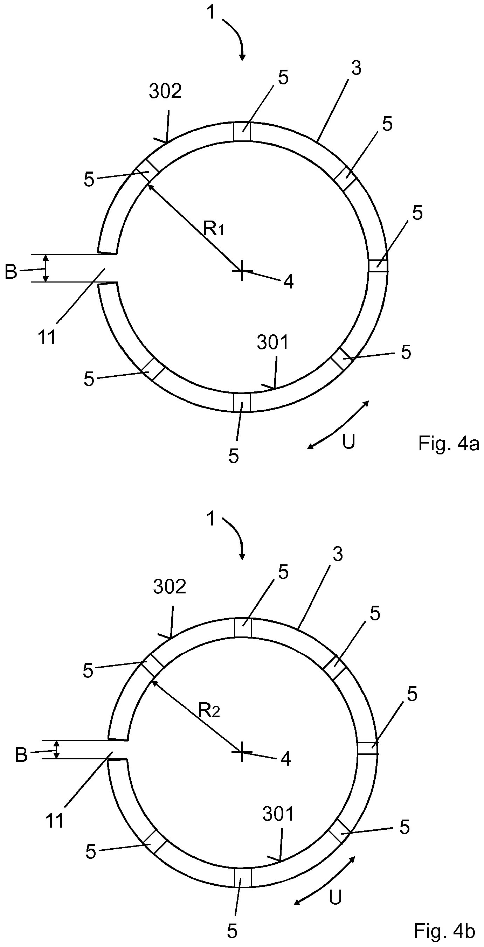

Der Synchronring 7 ist dabei in Fig. 3 aus Messing gefertigt, er kann aber auch aus gestanztem Stahl konventioneller Bauart gefertigt sein. Der Konus des Synchronrings 7, welcher von einer Kontaktfläche 10 gebildet wird, hat dabei denselben großen inneren Winkel α₂, also identisch zum Einbauwinkel α₂ des Reibrings 1. Die Kontaktfläche 10 des Synchronrings 7 korrespondiert damit mit der äusseren Einbaufläche 302 des Reibrings 1. Der Synchronring 7 weist ausserdem an sich bekannte, nicht näher dargestellte Kopplungstaschen für den segmentierten Reibring 1 auf. Der segmentierte Reibring 1 gemäss Fig. 3 ist in drei gleich große Reibringsegmente 31, 32, 33 segmentiert, was aus Gründen der Übersichtlichkeit in Fig. 3 nicht im Detail dargestellt ist. Der Reibring besteht insbesondere aus Blech. Der Reibring 1 hat gemäss der Erfindung dabei die Einbaufläche 302 mit dem Einbauwinkel α₂, wobei die Einbaufläche 302 als Trennfläche verwendet wird. Der Innenkonus des Reibrings 1 wird durch die Reibfläche 301 mit Reibwinkel α ₁ gebildet, wobei α ₁ < α₂ gilt. Diese innere Konusfläche, also die Reibfläche 301 wird zum Synchronisieren genutzt. Der Reibring kann auch als ein geschlitzter Ring entsprechend den Fig. 4a und 4b ausgeführt sein.

Im Betriebszustand wird der Synchronring 7 axial in Richtung zum Gangrad 8, das als Zahnrad ausgebildet ist, verschoben und damit werden auch die drei Reibringsegmente 31, 32, 33 des Reibrings 1 durch den Winkel α₂ erfasst. Der Synchronring 7 und der segmentierte Reibring 1 werden dann zusammen gleichzeitig bewegt und mit dem Innenkonus, also der Reibfläche 301 mit Reibwinkel α₁, auf das Gangrad 8, das ebenfalls einen entsprechenden Gegenkonus mit Konuswinkel α₁ hat, eingreifen. Der Synchronring 7 kann dann wie ein herkömmlicher Synchronring 7 ansteuern und indexieren. Die Zähne der Schiebemuffe 6 sind im Kontakt mit den Zähnen des Synchronrings 7 und erzeugen so, durch die Differenzdrehzahl, ein Moment zwischen dem segmentierten Reibring 1 und dem Gangrad 8.

Nach der Synchronisation, wenn die Differenzdrehzahl Null ist, wird die Schiebemuffe 6 axial bewegt, wobei diese die Synchronringzähne passiert und dann im Kontakt mit den Zähnen der Flanken des Gangrades 8 steht. Aufgrund dessen gibt es keine Axialkraft mehr auf dem Synchronring 7. Der große Winkel α₂ wird das System trennen (Winkel > tan⁻¹ µ). Dies resultiert durch die Eliminierung der Kräfte in Umfangsrichtung des segmentierten Reibrings 1. An diesem Punkt brechen der Synchronring 7 und der segmentierte Reibring 1 vom Gangrad 8 los. Anschließend kann die Schiebemuffe 6 das Gangrad 8 passieren. Die Schaltung ist dann vollständig im Eingriff.

Dabei sind im Speziellen mindestens zwei verschiedene Optionen 1 und 2 möglich. Bei Option 1 weist die Reibfläche auf dem Innenkonus der Segmente mit dem kleinen Winkel α₁. Der große Lösewinkel α₂ ist auf der äußeren Konusfläche der Segmente.

Bei Option 2, hat die Reibfläche auf dem Außenkonus der Segmente den kleinen Winkel α₁. Der große Lösewinkel α₂ ist auf der inneren Konusfläche der Segmente, wobei in der Praxis die Option 1 das bevorzugte Konzept ist.

In Figur 4a ist schematisch eine alternative Ausführungsform eines erfindungsgemässen Reibrings 1 in einer expandierten Konfiguration mit einem Radius R₁ dargestellt, der beispielsweise in der Synchronisierungseinheit gemäss Fig. 3 verwendbar ist.

Der Reibring 1 umfasst einen geschlitzten Reibringkörper 3. In dem Reibringkörper 3 ist genau ein Schlitz 11 angeordnet, der eine Breite B aufweist, die in Umfangsrichtung U etwa 3 mm des Umfangs des Reibringkörpers überstreicht.

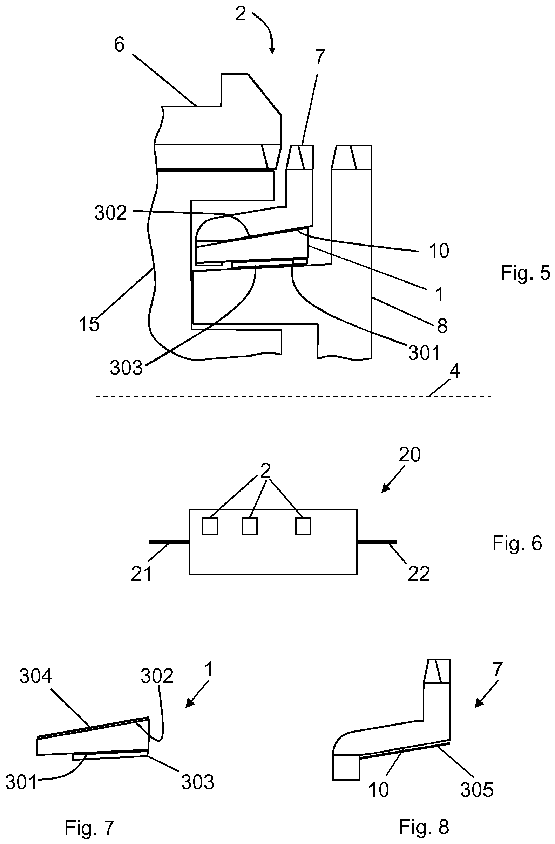

In Figur 4b ist der Reibring 1 gemäss Figur 4 in einer zusammengezogenen Konfiguration mit dem Radius R₂ gezeigt. Der Schlitz 11 gemäss Figur 5 hat eine kleinere Breite B als der Schlitz gemäss Figur 4a. Der Reibring kann auch insbesondere so ausgeführt sein, dass sich in der zusammengezogenen Konfiguration, also im unbelasteten Zustand die entgegenliegenden Enden berühren, also kein Schlitz mehr vorhanden ist. Besonders vorteilhaft ist es, wenn an den Enden eine Anpresskraft von 4 bis 5 N vorliegt. Einem Aufweiten des Reibrings nach einem Auftrennen des Reibrings kann beispielsweise dadurch entgegengewirkt werden, dass an seiner Oberfläche, insbesondere an der Einbaufläche eine Eigenspannung eingebracht wird. Dies kann beispielsweise durch Nitrieren oder Sandstrahlen erfolgen.

In Figur 5 ist ein Ausschnitt einer Synchronisierungseinheit 2 in einem Betriebszustand, also bei einem Synchronisiervorgang schematisch dargestellt. Die Synchronisierungseinheit 2 umfasst ein Gangrad 8, einen Synchronring 7, einen Reibring 1, eine Synchronnabe 15 und eine Schiebemuffe 6. Der Synchronring 7 ist so in Richtung des zu synchronisierenden Gangrads 8 verschoben, dass die Kontaktfläche 10 des Synchronrings 7 an der Einbaufläche 302 des Reibrings 1 anliegt, wodurch ein Reibkontakt zwischen einem Reibbelag 303 der Reibfläche 301 und dem Gangrad 8 entsteht und eine Drehzahlangleichung zwischen Gangrad 8 und Reibring 1 und damit Synchronring 7 erfolgt.

Die Kontaktfläche 10 des Synchronrings 7 und/oder die Einbaufläche 302 des Reibrings 1 weisen dabei eine adhäsionsvermindernde Oberflächenstruktur auf, auf die im Zusammenhang mit den Figuren 7, 8 und 9a - 9h eingegangen wird.

In Figur 6 ist sehr schematisch ein Zahnräderwechselgetriebe 20 für ein Fahrzeug insbesondere ein Kraftfahrzeug dargestellt. Das Zahnräderwechselgetriebe 20 verfügt über eine Getriebeeingangswelle 21 und eine Getriebeausgangswelle 22 und insgesamt drei Synchronisierungseinheiten 2, mittels welchen Gangwechsel im Zahnräderwechselgetriebe 20 durchgeführt werden können.

In Figur 7 ist ein Reibring 1 in einer Schnittdarstellung entsprechend Figur 5 dargestellt. Der Reibring 1 weist an der inneren Reibfläche 301 einen Reibbelag 303 und an der äusseren Einbaufläche 302 eine Kohlenstoffschicht in Form einer DLC-Schicht 304 als adhäsionsvermindernde Beschichtung und so als adhäsionsvermindernde Oberflächenstruktur auf.

In Figur 8 ist ein Synchronring 7 in einer Schnittdarstellung entsprechend Figur 5 dargestellt. Der Synchronring 7 weist an der Kontaktfläche 10 eine Kohlenstoffschicht in Form einer DLC-Schicht 305 als adhäsionsvermindernde Beschichtung und so als adhäsionsvermindernde Oberflächenstruktur auf.

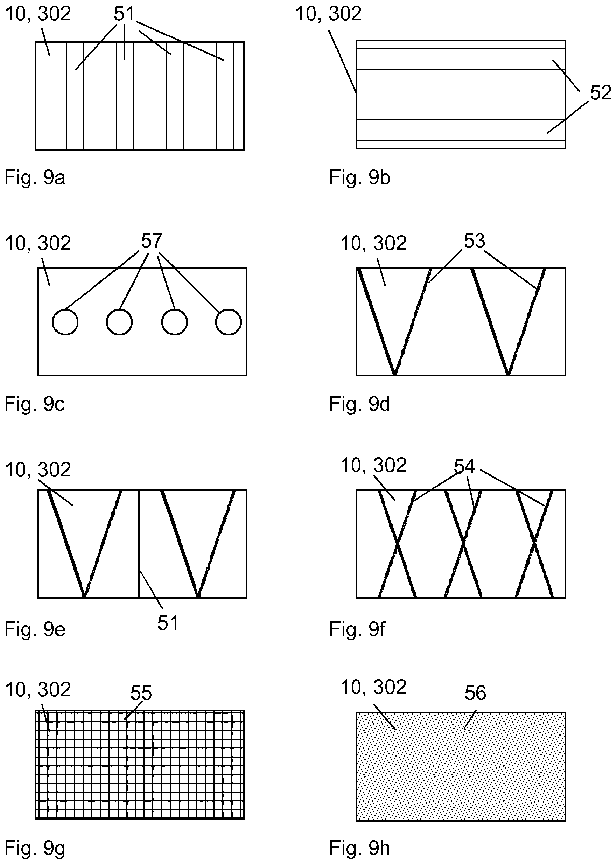

Figuren 9a - 9h zeigen Ausschnitte von Kontaktflächen 10 von Synchronringen 7 und äusseren Einbauflächen 302 von Reibringen 1 mit verschiedenen Oberflächenstrukturen, welche alle Vertiefungen aufweisen.

In Figur 9a sind die Vertiefungen als Axial-Nuten 51 ausgeführt, welche im Wesentlichen entlang der Reibringachse 4 verlaufen.

In Figur 9b sind die Vertiefungen als Radial-Nuten 52 ausgeführt, welche im Wesentlichen in Umfangrichtung U verlaufen.

In Figur 9c sind die Vertiefungen als Bohrungen 57 ausgeführt, welche als Sacklochbohrungen oder als Durchgangsbohrungen ausgeführt sein können.

In Figur 9d sind die Vertiefungen als V-Nuten 53 ausgeführt.

In Figur 9e sind die Vertiefungen als Kombination von Axialnuten 51 und dazwischen angeordneten V-Nuten 53 ausgeführt.

In Figur 9f sind die Vertiefungen als X-Nuten 54 ausgeführt.

In Figur 9g sind die Vertiefungen als eine Lasertextur 55 ausgeführt.

In Figur 9h sind die Vertiefungen 56 mittels eines Kugel-, Sandstrahl- oder Ätzverfahrens erzeugt worden.

## Patentansprüche

1. Baueinheit für eine Synchronisierungseinheit eines Zahnräderwechselgetriebes mit
- einem Reibring (1), welcher einen konischen Reibringkörper (3) mit einer Reibfläche (301) und eine Einbaufläche (302) umfasst, die den Reibringkörper (3) in einer senkrecht zu einer axialen Reibringachse (4) verlaufenden radialen Umfangsrichtung (U) jeweils begrenzen, wobei sich die Reibfläche (301) unter einem vorgebaren Reibwinkel (α₁) und die Einbaufläche (302) unter einem vorgebaren Einbauwinkel (α₂) jeweils konisch entlang der Reibringachse (4) erstrecken, und
- einem Synchronring (7) mit einer zur Einbaufläche (302) des Reibrings (1) korrespondierenden Kontaktfläche (10),
wobei der Synchronring (7) und der Reibring (1) so ausgestaltet und angeordnet sind, dass bei einem Synchronisiervorgang, bei welchem der Synchronring (7) in Richtung eines zu synchronisierenden Gangrads (8) verschoben wird, die Kontaktfläche (10) des Synchronrings (7) an der Einbaufläche (302) des Reibrings (1) zur Anlage kommt und die Reibfläche (301) des Reibrings (1) mit dem Gangrad (8) in Reibkontakt tritt, **dadurch gekennzeichnet, dass** der Reibring (1) und der Synchronring (7) aus unterschiedlichen Materialien bestehen.

2. Baueinheit nach Anspruch 1,
**dadurch gekennzeichnet, dass** der Reibring (1) aus Blech und der Synchronring (7) aus Messing besteht.

3. Baueinheit nach Anspruch 1 oder 2,
**dadurch gekennzeichnet, dass** die Einbaufläche (302) des Reibrings (1) und/oder die Kontaktfläche (10) des Synchronrings (7) eine adhäsionsvermindernde Oberflächenstruktur aufweist.

4. Baueinheit nach einem der Ansprüche 1 bis 3,
**dadurch gekennzeichnet, dass** der Reibwinkel (α₁) des Reibrings (1) verschieden vom Einbauwinkel (α₂) des Reibrings (1) ist, insbesondere der Einbauwinkel (α₂) des Reibrings (1) grösser als der Reibwinkel (α₁) des Reibrings (1) ist.

5. Baueinheit nach einem der Ansprüche 1 bis 4,
**dadurch gekennzeichnet, dass** die Einbaufläche (302) des Reibrings (1) und/oder die Kontaktfläche (10) des Synchronrings (7) Vertiefungen (51, 52, 53, 54, 55, 56, 57) aufweisen.

6. Baueinheit nach Anspruch 5, **dadurch gekennzeichnet, dass** die Vertiefungen (51, 52, 53, 54, 57) als Nuten (51, 52, 53, 54) und/oder Löcher (57) ausgeführt sind.

7. Baueinheit nach Anspruch 5 oder 6, **dadurch gekennzeichnet, dass** die Vertiefungen (56) mittels eines Kugel- oder Sandstrahlverfahrens erzeugt wurden.

8. Baueinheit nach Anspruch 5 oder 6, **dadurch gekennzeichnet, dass** die Vertiefungen als Lasertexturierung (55) ausgeführt ist.

9. Baueinheit nach Anspruch 5 oder 6, **dadurch gekennzeichnet, dass** die Vertiefungen (56) mittels Ätzverfahrens erzeugt wurden.

10. Baueinheit nach einem der Ansprüche 1 bis 9, **dadurch gekennzeichnet, dass** die Einbaufläche (302) des Reibrings (1) und/oder die Kontaktfläche (10) des Synchronrings (7) eine adhäsionsvermindernde Beschichtung (304, 305) aufweisen.

11. Baueinheit nach Anspruch 10, **dadurch gekennzeichnet, dass** die adhäsionsvermindernde Beschichtung (304, 305) als eine Kohlenstoffschicht, insbesondere als eine amorphe Kohlenstoffschicht ausgeführt ist.

12. Zahnräderwechselgetriebe für ein Fahrzeug mit einer Baueinheit (9) nach einem der Ansprüche 1 bis 11.

## Claims

1. An assembly for a synchronization unit of a gear-changing transmission comprising
- a friction ring (1) which comprises a conical friction ring body (3) having a friction surface (301) and an installation surface (302) which respectively bound the friction ring body (3) in a radial peripheral direction (U) extending perpendicular to an axial friction ring axis (4), wherein the friction surface (301) extends at a predefinable friction angle (α₁) and the installation surface (302) extends at a predefinable installation angle (α₂,), in each case conically along the friction ring axis (4), and
- a synchronizer ring (7) having a contact surface (10) corresponding to the installation surface (302) of the friction ring (1),
wherein the synchronizer ring (7) and the friction ring (1) are configured and arranged such that the contact surface (10) of the synchronizer ring (7) comes into contact with the installation surface (302) of the friction ring (1) and the friction surface (301) of the friction ring (1) comes into rubbing contact with the gear wheel (8) during a synchronization process in which the synchronizer ring (7) is displaced in the direction of a gear wheel (8) to be synchronized,
**characterized in that** the friction ring (1) and the synchronizer ring (7) consist of different materials.

2. An assembly in accordance with claim 1,
**characterized in that** the friction ring (1) consists of sheet metal and the synchronizer ring (7) consists of brass.

3. An assembly in accordance with claim 1 or 2,
**characterized in that** the installation surface (302) of the friction ring (1) and/or the contact surface (10) of the synchronizer ring (7) has/have an adhesion-reducing surface structure.

4. An assembly in accordance with any one of the claims 1 to 3, **characterized in that** the friction angle (α₁) of the friction ring (1) differs from the installation angle (α₂) of the friction ring (1), in particular the installation angle (α₂) of the friction ring (1) is larger than the friction angle (α₁) of the friction ring (1).

5. An assembly in accordance with any one of the claims 1 to 4, **characterized in that** the installation surface (302) of the friction ring (1) and/or the contact surface (10) of the synchronizer ring (7) has/have recesses (51, 52, 53, 54, 55, 56, 57).

6. An assembly in accordance with claim 5,
**characterized in that** the recesses (51, 52, 53, 54, 57) are formed as grooves (51, 52, 53, 54) and/or holes (57).

7. An assembly in accordance with claim 5 or 6,
**characterized in that** the recesses (56) are produced by means of a shot blasting process or a sandblasting process.

8. An assembly in accordance with claim 5 or 6,
**characterized in that** the recesses are formed as a laser texturizing (55).

9. An assembly in accordance with claim 5 or 6,
**characterized in that** the recesses (56) are produced by means of an etching process.

10. An assembly in accordance with any one of the claims 1 to 9, **characterized in that** the installation surface (302) of the friction ring (1) and/or the contact surface (10) of the synchronizer ring (7) has/have an adhesion-reducing coating (304, 305).

11. An assembly in accordance with claim 10,
**characterized in that** the adhesion-reducing coating (304, 305) is formed as a carbon layer, in particular as an amorphous carbon layer.

12. A gear-changing transmission for a vehicle having an assembly (9) in accordance with any one of the claims 1 to 11.

## Revendications

1. Une unité de construction pour une unité de synchronisation d'une boîte de vitesse à roues dentées comportant
- une bague de friction (1), qui comprend un corps de bague de friction conique (3) ayant une surface de friction (301) et une surface d'installation (302), qui limitent chacun le corps de bague de friction (3) dans une direction circonférentielle (U) radiale s'étendant perpendiculairement à un axe de bague de friction axial (4), dans laquelle la surface de friction (301) s'étend selon un angle de friction (α₁) prédéterminé et la surface d'installation (302) s'étend selon un angle d'installation (α₂) prédéterminé chacun de manière conique le long de l'axe de bague de friction (4), et
- une bague de synchronisation (7) avec une surface de contact (10) correspondant à la surface d'installation (302) de la bague de friction (1),
dans laquelle la bague de synchronisation (7) et la bague de friction (1) sont conçues et disposées de telle sorte que, pendant un processus de synchronisation dans lequel la bague de synchronisation (7) est déplacée dans la direction d'une roue dentée (8) à synchroniser, la surface de contact (10) de la bague de synchronisation (7) vient en appui sur la surface d'installation (302) de la bague de friction (1) et la surface de friction (301) de la bague de friction (1) vient en contact par friction avec la roue dentée (8),
**caractérisé en ce que**
la bague de friction (1) et la bague de synchronisation (7) sont constituées de matériaux différents.

2. Une unité de construction selon la revendication 1,
**caractérisé en ce que** la bague de friction (1) est en tôle et la bague de synchronisation (7) est en laiton.

3. Une unité de construction selon la revendication 1 ou 2,
**caractérisé en ce que** la surface d'installation (302) de la bague de friction (1) et/ou la surface de contact (10) de la bague de synchronisation (7) présente une structure de surface réduisant l'adhérence.

4. Une unité de construction selon l'une des revendications 1 à 3, **caractérisé en ce que** l'angle de friction (α₁) de la bague de friction (1) est différent de l'angle d'installation (α₂) de la bague de friction (1), en particulier l'angle d'installation (α₂) de la bague de friction (1) est supérieur à l'angle de friction (α₁) de la bague de friction (1).

5. Une unité de construction selon l'une des revendications 1 à 4, **caractérisé en ce que** la surface d'installation (302) de la bague de friction (1) et/ou la surface de contact (10) de la bague de synchronisation (7) présentent des cavités (51, 52, 53, 54, 55, 56, 57).

6. Une unité de construction selon la revendication 5,
**caractérisé en ce que** les cavités (51, 52, 53, 54, 57) sont conçues comme rainures (51, 52, 53, 54) et/ou comme trous (57).

7. Une unité de construction selon la revendication 5 ou 6,
**caractérisé en ce que** les cavités (56) ont été produites au moyen d'un procédé de grenaillage de précontrainte ou de sablage.

8. Une unité de construction selon la revendication 5 ou 6,
**caractérisé en ce que** les cavités sont conçues comme texturation laser (55).

9. Une unité de construction selon la revendication 5 ou 6,
**caractérisé en ce que** les cavités (56) ont été produites au moyen d'un procédé de gravure.

10. Une unité de construction selon l'une des revendications 1 à 9, **caractérisé en ce que** la surface d'installation (302) de la bague de friction (1) et/ou la surface de contact (10) de la bague de synchronisation (7) présentent un revêtement réduisant l'adhérence (304, 305).

11. Une unité de construction selon la revendication 10,
**caractérisé en ce que** le revêtement réduisant l'adhérence (304, 305) est conçu comme une couche de carbone, en particulier comme une couche de carbone amorphe.

12. Une boîte de vitesse à roues dentées pour un véhicule avec une unité de construction (9) selon l'une des revendications 1 à 11.
